# EUROPEAN PATENT SPECIFICATION

(11) **EP 3 049 205 B1**
(45) Date of publication and mention of the grant of the patent: **31.01.2018**
(21) Application number: 14777861.7
(22) Date of filing: 16.09.2014
(51) Int. Cl.: B23D 47/04, B28D 1/04, B28D 7/04

(54) **MACHINE FOR CUTTING SHEETS, PARTICULARLY OF MARBLE, GRANITE, GLASS AND COMPOSITE MATERIALS**
MASCHINE ZUM SCHNEIDEN VON PLATTEN, INSBESONDERE AUS MARMOR, GRANIT, GLAS UND VERBUNDSTOFFEN
MACHINE POUR LA COUPE DE PANNEAUX, EN PARTICULIER DE MARBRE, GRANITE, VERRE ET MATÉRIAUX COMPOSITES

(30) Priority: 24.09.2013 IT MO20130261
(43) Date of publication of application: 03.08.2016
(73) Proprietor: Helios Automazioni S.r.l., 80018 Mugnano di Napoli (NA) (IT)
(72) Inventor: FONTANA, Antonio, I-80018 Mugnano di Napoli (NA) (IT)
(74) Representative: Brunacci, Marco
(86) International application number: PCT/IB2014/064548
(87) International publication number: WO 2015/044833

(56) References cited:
- WO-A1-2005/014252
- DE-A1- 4 206 274
- US-A- 3 945 285

## Description

### Technical Field

The present invention relates to a machine for cutting sheets, particularly of marble, granite, glass and composite materials according to the preamble of claim 1.

### Background Art

Such a machine is known from WO2005014252A1. Machines are known for cutting sheets of marble or other materials which have a horizontal work top, on which the sheet being machined is loaded, and a cutting blade, e.g. a diamond blade or the like, which is movable above the work top by means of dedicated movement means.

The movement means consist, e.g., in a series of Cartesian guides that bring the cutting blade on a mobile beam and move it along the three Cartesian axes, i.e. the two horizontal directions and the vertical direction.

With the mobile beam and, more generally, with the movement means of the cutting blade are also associated special auxiliary means designed for moving the sheet to be cut and/or the cut sheet on the work top, and possibly for its vertical clamping.

The use of such auxiliary means, however, takes time away from the actual machining of the cutting blade during the movement phase, significantly slowing down the operations and reducing machine output.

For this reason, the operators sometimes prefer to move or hold the sheet manually to spend less time as possible; such behavior, however, is likely to jeopardize their safety.

It is easy to understand, in fact, that moving or holding the sheet by hand while the cutting blade is in operation may cause serious injury to the operator.

Furthermore the movement of large sheets is particularly tiring and dangerous for the health of the operator's musculoskeletal system.

### Description of the Invention

The main aim of the present invention is to provide a machine for cutting sheets, particularly of marble, granite, glass and composite materials, which increases output and processing rapidity and enables to drastically reduce machine downtime, under conditions of maximum reliability and safety for the operator.

Another object of the present invention is to provide a machine for cutting sheets, particularly of marble, granite, glass and composite materials which allows to overcome the mentioned drawbacks of the prior art within the ambit of a simple, rational, easy and effective to use as well as affordable solution.

The above mentioned objects are achieved by the present machine for cutting sheets, particularly of marble, granite, glass and composite materials, according to claim 1. Further preferred embodiments are defined by the features of dependent claims 2-9.

### Brief Description of the Drawings

Other characteristics and advantages of the present invention will become better evident from the description of a preferred but not exclusive embodiment of a machine for cutting sheets, particularly of marble, granite, glass and composite materials, illustrated by way of an indicative, but not limitative, example in the accompanying drawings in which:

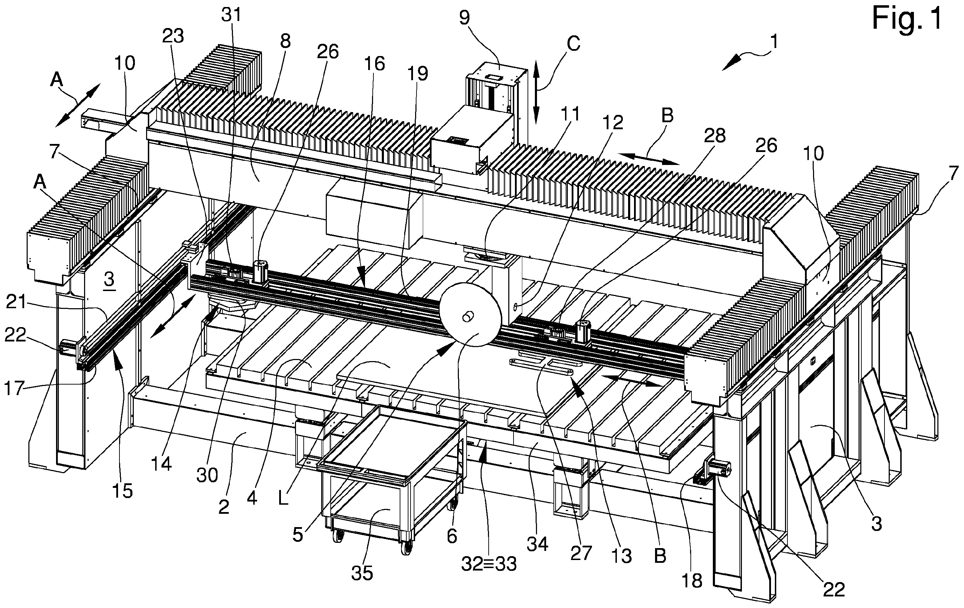

Figure 1 is an axonometric view of the machine according to the invention;

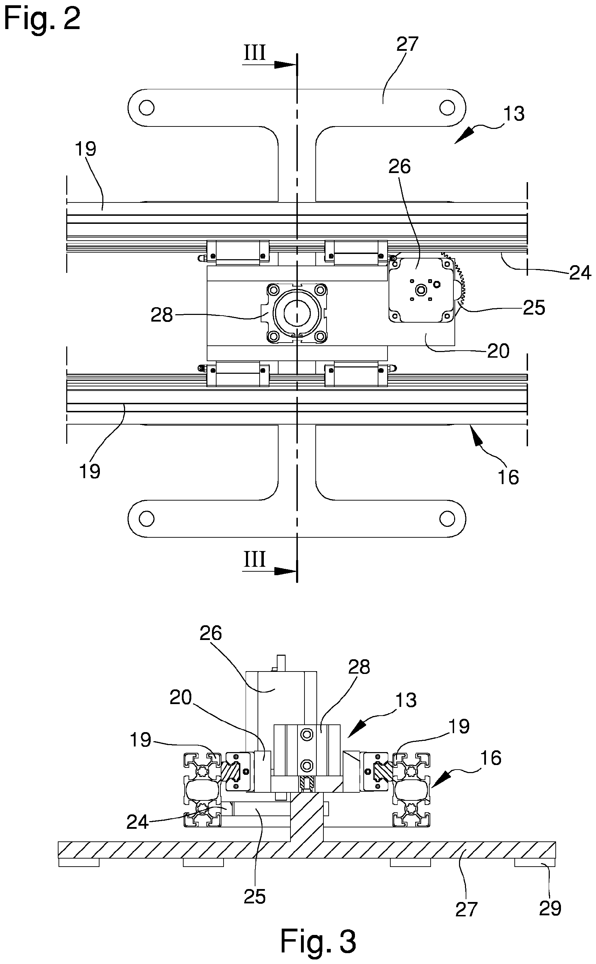

Figure 2 is a plan view of the first head provided by the machine according to the invention;
Figure 3 is a sectional view along the track plane III - III of Figure 2;
Figures 4 to 6 show, in a succession of side views, some phases of the operation of the machine according to the invention.

### Embodiments of the Invention

With particular reference to these figures, globally indicated by reference numeral 1 is a machine for cutting sheets, particularly of marble, granite, glass and composite materials.

The machine 1 comprises a base frame 2, 3 for resting on the ground.

The base frame 2, 3 comprises a bedplate 2 and two walls 3 that rise from the opposite sides of the bedplate 2.

With the base frame 2, 3 is associated at least a work top 4 for at least a sheet L to be cut.

The work top 4 is substantially horizontal and extends between the two walls 3.

The sheet L is placed on the work top 4 to be cut by means of a cutting head 5.

The cutting head 5 has at least a cutting tool 6 to cut the sheet L, e.g. the type of a disc blade or the like, and associated with the base frame 2, 3 by interposition of first movement means 7, 8, 9 of the cutting head 5.

The first movement means 7, 8, 9 comprise:
- a first guide element 7, associated with the base frame 2, 3 and suitable for the movement of the cutting head 5 along a first direction A substantially parallel to the work top 4. The first guide element 7, e.g., consists of two rails mounted on top of the walls 3. The rails 7 extend along the first direction A, horizontal and parallel to the walls 3; and
- a second guide element 8, associated with the first guide element 7 in a sliding manner along the first direction A and suitable for the movement of the cutting head 5 along a second direction B substantially parallel to the work top 4 and transversal to the first direction A. The second guide element 8, e.g., consists of a beam, which has the extremities 10 mounted in a sliding manner on the rails 7 and which extends along the second direction B, horizontal and at right angles to the walls 3 and above the work top 4;
- a third guide element 9, associated with the second guide element 8 in a sliding manner along the second direction B and suitable for the movement of the cutting head 5 along a third direction C substantially transversal to both the first direction A and the second direction B. The third guide element 9, e.g., consists of an upright which, with respect to the beam 8, can slide horizontally along the second direction B and vertically along the third direction C. The upright 9 has a lower extremity which carries the cutting head 5 and which can be lowered and lifted to move the cutting head 5 close to and away from the work top 4.

Besides the mobility given to the cutting head 5 by the first movement means 7, 8, 9, the cutting head 5 has other degrees of freedom which allow the cutting tool 6 to rotate around one or more work axes.

The cutting head 5, e.g., comprises a first rotating unit 11, which allows the cutting tool 6 to rotate around a vertical axis of rotation, and a second rotating unit 12, which allows the cutting tool 6 to rotate with respect to a horizontal axis of rotation, to change the orientation and inclination of the cutting tool 6 with respect to the work top 4.

The machine 1 also comprises at least a gripping/retention head 13, 14 of the sheet L; in this respect, it is specified that in the present treatise the expression "gripping/retention head" means a head-tool able to grasp the sheet, or to hold it, or both.

The gripping/retention head 13, 14 is associated with the base frame 2, 3 by interposition of second movement means 15, 16 of the gripping/retention head 13, 14.

The second movement means 15, 16 are separate and independent from the first movement means 7, 8, 9; in other words, in the machine 1 according to the invention, the base frame 2, 3 supports both the first movement means 7, 8, 9, which hold the cutting head 5, and the second movement means 15, 16, which hold the gripping/retention head 13, 14, and the cutting head 5 and the gripping/retention head 13, 14 can be moved simultaneously or separately without the motion of one affecting the motion of the other.

The second movement means 15, 16 comprise at least a first guide unit 15, associated with the base frame 2, 3 and suitable for moving the gripping/retention head 13, 14 along a first direction A substantially parallel to the work top 4.

The first direction A of the first guide unit 15 coincides with the first direction A of the first guide element 7.

The first guide unit 15, e.g., comprises a first track 17, associated with a wall 3, and a second track 18 associated with the other wall 3.

The tracks 17, 18 extend along the first direction A, horizontal and parallel to the walls 3.

The tracks 17, 18, in other words, are parallel to the rails 7, but arranged below them and above the height, i.e. the distance from the ground, of the work top 4.

The second movement means 15, 16 also comprise a second guide unit 16, associated with the first guide unit 15 in a sliding manner along the first direction A and suitable for the movement of the gripping/retention head 13, 14 along a second direction B substantially parallel to the work top 4 and transversal to the first direction A.

The second direction B of the second guide unit 16 coincides with the second direction B of the second guide element 8.

The second guide unit 16, e.g., comprises one or more girders 19, which have the ends 23 mounted in a sliding manner on the tracks 17, 18 and which extend along the second direction B, horizontal and at right angles to the walls 3 and above the work top 4.

The girders 19, in other words, are parallel to the beam 8, but arranged below it and above the height, i.e. the distance from the ground, of the work top 4.

The gripping/retention head 13, 14 comprises at least a slide 20 associated with the second guide unit 16 in a sliding manner along the second direction B.

For the movement of the gripping/retention head 13, 14 along the first direction A, the first guide unit 15 comprises a first drive system 21, 22, which e.g. consists of a flexible element 21 closed on itself in a loop and wrapped at least partially around two wheels, of which at least one is motorized by means of a first motor 22.

Each flexible element 21, which can be the type of a tape, a belt, a chain, a rope or the like, extends between the wheels defining two segments substantially parallel to the respective track 17, 18, one of these segments being associated with the ends 23 of girders 19.

The drive of the first motors 22 starts the flexible elements 21 by dragging the ends 23 of girders 19 along the first direction A.

For the movement of the gripping/retention head 13, 14 along the second direction B, the second guide unit 16 comprises a second drive system 24, 25, 26, which e.g. consists of a rack 24 which extends parallel and integral to the girders 19 and on which a pinion 25 is engaged.

The pinion 25 is mounted on the slide 20 and driven in rotation thanks to a second motor 26, which is also present on board the slide 20.

It is easy to understand, therefore, that the drive of pinion 25 drags the slide 20 along the second direction B.

It is also easy to understand that the actuator systems used for the movements of the gripping/retention head 13, 14 may also differ from the first drive system 21, 22 and the second drive system 24, 25, 26 shown in the figures and have pneumatic, hydraulic, electrical, electromechanical drives, or the like depending on the specific needs.

Usefully, in the embodiment of the machine 1 shown in the figures are provided two gripping/retention heads 13, 14, of which a first head 13 and a second head 14.

Both the first head 13 and the second head 14 are associated with the second guide unit 16, the first head 13 and the second head 14 moving along the second guide unit 16 independently the one from the other.

In other words, each head 13, 14 has its own pinion 25 which engages on the rack 24 and is driven by its own second motor 26, independent from the second motor 26 of the other head 13, 14.

This particular embodiment allows to optimize the components of the system, being able to exploit the same girders 19, to support both the first head 13 and the second head 14 and make them slide simultaneously along the first direction A, as well as the same rack 24, to move forward the first head 13 and second head 14 independently the one from the other along the second direction B.

The first head 13 has pressing means 27, 28 suitable for pressing the sheet on the work top 4.

The pressing means 27, 28 comprise at least a resting plate 27 moving vertically to rest on the sheet L that is in turn resting on the work top 4.

More in detail, the resting plate 27 is shaped to define a plurality of branches that extend substantially horizontally.

On the lower surface of the resting plate 27 there are pads 29 made of a material that does not ruin the sheet L during the contact.

For the vertical movement of the resting plate 27, the pressing means 27, 28 have a first vertical actuator 28, the type of a pneumatic, hydraulic, electrical or electromechanical cylinder, mounted on the corresponding slide 20.

The overall dimensions of the first head 13 are much reduced and allow the resting plate 27 to work in the short distance from the cutting tool 6, ensuring a perfect locking of the sheet L and allowing to perform very precise cuts even on pieces of small dimensions.

This is possible thanks to the fact that the resting plate 27 has rather reduced vertical dimensions, the second guide unit 16 being arranged very close to the work top 4 and the stroke of the first vertical actuator 28 being very short, the entire suspended structure ending up to be particularly stable.

The second head 14 has gripping means 30, 31 suitable for taking the sheet L and move it with respect to the work top 4.

The gripping means 30, 31 comprise at least a suction plate 30 (e.g., vacuum sheets, suction cups or the like) moving vertically to abut the sheet L that is in turn resting on the work top 4.

More in detail, the suction plate 30 is shaped so as to extend mainly horizontally and have a very wide contact surface with the sheet L.

The suction plate 30 adheres firmly to the sheet L to drag it together with the second head 14 along the work top 4.

In this respect it is emphasized that it is not necessary that the suction plate 30 is able to fully raise the sheet L with respect to the work top 4, but it is sufficient that it adheres to it so as to allow its dragging horizontally.

For the vertical movement of the suction plate 30, the second head 14 has a second vertical actuator 31, the type of a pneumatic, hydraulic, electrical or electromechanical cylinder, mounted on the corresponding slide 20.

Also with regard to the second head 14, the overall dimensions are very reduced and allow the suction plate 30 to work in the short distance from the cutting tool 6 and from the work top 4; also in this case it should be noticed that the suction plate 30 has rather reduced vertical dimensions and the stroke of the second vertical actuator 31 is very short to take advantage of the stability of the whole suspended structure.

In the embodiment shown in the figures, the first head 13 and the second head 14 are distinguished by the different means with which they come into contact with the sheet L; alternative embodiments are not however ruled out in which each gripping/retention head 13, 14 has both the pressing means 27, 28 and the gripping means 30, 31.

For special applications, it is also possible to equip the first head 13 and the second head 14 with further axes, also allowing e.g. the rotation of the resting plate 27 and of the suction plate 30 so as to increase the degrees of freedom of the system and its ductility.

The machine 1 also has at least a loading area 32 of the sheet to be cut and an unloading area 33 of the cut sheet L, and at least one of them can be reached by the gripping/retention head 13, 14 having the gripping means 30, 31, namely the second head 14, for loading and/or unloading the sheet L with respect to the work top 4.

In the embodiment shown in the figures, the loading area 32 and the unloading area 33 coincide with each other and are defined by a side 34 of the work top 4 parallel to the second direction B.

At such side 34, the first guide unit 15 extends beyond the length of the work top 4 and allows the second head 14 to place beyond the vertical overall dimensions of the work top 4 to reach the loading and unloading areas 32, 33.

At the loading and unloading areas 32, 33 the second head 14 cooperates with other supply and removal systems of the sheet L, such as, e.g., carts 35, sliding platforms, conveyor belts or the like.

In other words, the gripping/retention head 13, 14 according to the invention allows to provide the machine 1 also with a loading and unloading automated system that simplifies the operator's job and eliminates the risks affecting his/her musculoskeletal apparatus.

The automatism of the machine 1, in addition, significantly increases the safety conditions during machining; in this regard it is underlined that the machine 1 can usefully have a protection booth, not illustrated in the figures, suitable for insulating the work area within a confined space.

Alternative embodiments cannot however be ruled out wherein the loading and unloading of the sheet L occur in a different way; it is possible, e.g., that the loading area 32 is placed at the side 34 while the unloading area 33 is placed at the opposite side of machine 1, in which case the length of the first guide unit 15 is such as to extend beyond both the side 34 and the opposite side.

The operation of the machine 1 can easily be taken from the above description of its components.

The sheet L to be cut is taken from the loading area 32 thanks to the second head 14 and carried on the work top 4, where it is cut by the cutting tool 6.

During cutting the sheet L is locked and held on the work top 4 thanks to the pressing means 27, 28, which are arranged so as to crush and press one part of the sheet L downwards.

The positioning of the first head 13 and of the pressing means 27, 28 occurs at one point of the sheet L that is not involved by the cut and does not interfere with the forward path of the cutting tool 6.

Once the cut has been made, the second head 14 places the suction plate 30 on the cut sheet L and drags it towards the unloading area 33.

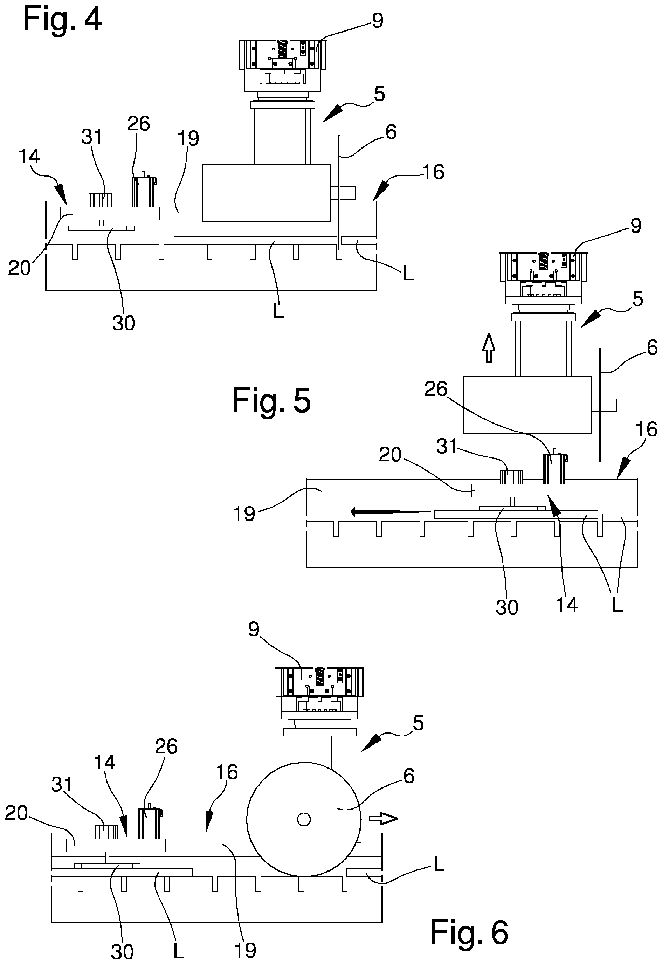

In the event it is necessary to perform two cuts orthogonal to each other on the same sheet L (Figures 4-6), the second head 14 also performs an additional function.

After the first cut (Figure 4), in fact, the second head 14 operates to grasp (Figure 5) one of the two parts of the sheet L involved by the first cut and moves it away from the other (Figure 6), so as to free space for the cutting tool 6 which carries out the second cut.

## Claims

1. Machine (1) for cutting sheets, particularly of marble, granite, glass and composite materials, comprising:
- at least a base frame (2, 3);
- at least a work top (4) for at least a sheet (L) to be cut, which is associated with said base frame (2, 3);
- at least a cutting head (5), having at least a cutting tool (6) to cut said sheet (L) and associated with said base frame (2, 3) by interposition of first movement means (7, 8, 9) of said cutting head (5);
- at least a gripping/retention head (13, 14) of said sheet (L), for grasping the sheet, or for holding it or for both grasping and holding it, associated with
said base frame (2, 3) by interposition of second movement means (15, 16) of said gripping/retention head (13, 14), said second movement means (15, 16) being separate and independent from said first movement means (7, 8, 9) and comprising:
- at least a first guide unit (15), associated with said base frame (2, 3) and suitable for moving said gripping/retention head (13, 14) along a first direction (A) substantially parallel to said work top (4); and
- at least a second guide unit (16), associated with said first guide unit (15) sliding along said first direction (A) and suitable for the movement of said gripping/retention head (13, 14) along a second direction (B) substantially parallel to said work top (4) and transversal to said first direction (A);
**characterized by** the fact that it comprises at least two of said gripping/retention heads (13, 14), of which a first head (13) and a second head (14), and by the fact that both said first head (13) and said second head (14) are associated with said second guide unit (16), said first head (13) and said second head (14) moving along said second guide unit (16) independently the one from the other.

2. Machine (1) according to claim 1, **characterized by** the fact that said gripping/retention head (13, 14) comprises at least a slide (20) associated with said second guide unit (16) sliding along said second direction (B).

3. Machine (1) according to one or more of the preceding claims, **characterized by** the fact that said gripping/retention head (13, 14) has pressing means (27, 28) suitable for pressing said sheet (L) on said work top (4).

4. Machine (1) according to claim 3, **characterized by** the fact that said pressing means (27, 28) comprise at least a resting plate (27) moving vertically to rest on said sheet (L) resting on said work top (4).

5. Machine (1) according to one or more of the preceding claims, **characterized by** the fact that said gripping/retention head (13, 14) has gripping means (30, 31) suitable for taking said sheet (L) and move it with respect to said work top (4).

6. Machine (1) according to claim 5, **characterized by** the fact that said gripping means (30, 31) comprise at least a suction plate (30) moving vertically to abut said sheet (L) resting on said work top (4).

7. Machine (1) according to claim 5 or 6, **characterized by** the fact that it comprises at least a loading area (32) of said sheet (L) to be cut and an unloading area (33) of said cut sheet (L), at least one of said loading area (32) and said unloading area (33) being reached by said gripping/retention head (13, 14) with gripping means (30, 31) for loading and/or unloading said sheet (L) with respect to said work top (4).

8. Machine (1) according to one or more of the preceding claims, **characterized by** the fact that said first head (13) comprises pressing means (27, 28) and said second head (14) comprises gripping means (30, 31).

9. Machine (1) according to one or more of the preceding claims, **characterized by** the fact that it comprises at least a protection booth suitable for insulating the work area within a confined space.

## Patentansprüche

1. Maschine (1) zum Schneiden von Platten, insbesondere aus Marmor, Granit, Glas und Kompositmaterial, umfassend:
- mindestens einen Grundrahmen (2, 3);
- mindestens eine Arbeitsfläche (4) für mindestens eine zu schneidende Platte (L), die dem Grundrahmen (2, 3) zugeordnet ist;
- mindestens ein Schneidkopf (5), der mindestens ein Schneidwerkzeug (6) aufweist, um die Platte (L) zu schneiden und dem Grundrahmen (2, 3) durch Einfügung von ersten Bewegungsmitteln (7, 8, 9) des Schneidkopfes (5) zugeordnet ist;
- mindestens ein Greif-/ Retentionskopf (13, 14) der Platte (L), um die Platte zu greifen, oder um sie zu halten, oder um sie zu greifen und zu halten, zugeordnet dem Grundrahmen (2, 3) durch Einfügen von zweiten Bewegungsmitteln (15, 16) des Greif-/ Retentionskopfes (13, 14), wobei die zweiten Bewegungsmittel (15, 16) separat und unabhängig von den ersten Bewegungsmitteln (7, 8, 9) sind und umfassen:
- mindestens eine Führungseinheit (15), die dem Grundrahmen (2, 3) zugeordnet ist und geeignet ist, den Greif-/ Retentionskopf (13, 14) entlang einer ersten, im Wesentlichen zu der Arbeitsfläche (4) parallelen Richtung (A) zu bewegen; und
- mindestens eine zweite Führungseinheit (16), die der ersten Führungseinheit (15), die entlang der ersten Richtung (A) gleitet, zugeordnet ist und geeignet ist zur Bewegung des Greif-/ Retentionskopfes (13, 14) entlang einer zweiten, im Wesentlichen zu der Arbeitsfläche (4) parallelen und zu der ersten Richtung (A) transversalen Richtung (B);
**dadurch gekennzeichnet, dass** sie mindestens zwei der Greif-/ Retentionsköpfe (13, 14) umfasst, einen ersten Kopf (13) und einen zweiten Kopf (14), und dass beide, der erste Kopf (13) und der zweite Kopf (14) der zweiten Führungseinheit (16) zugeordnet sind, der erste Kopf (13) und der zweite Kopf (14) sich entlang der zweiten Führungseinheit (16) unabhängig voneinander bewegen.

2. Maschine (1) nach Anspruch 1, **dadurch gekennzeichnet, dass** der Greif-/ Retentionskopf (13, 14) mindestens einen Gleiter (20) umfasst, der der zweiten Führungseinheit (16) zugeordnet ist und entlang der zweiten Richtung (B) gleitet.

3. Maschine (1) nach einem oder mehreren der vorhergehenden Ansprüche, **dadurch gekennzeichnet, dass** der Greif-/ Retentionskopf (13, 14) Pressmittel (27, 28) aufweist, die geeignet sind die Platte (L) auf die Arbeitsfläche (4) zu pressen.

4. Maschine (1) nach Anspruch 3, **dadurch gekennzeichnet, dass** die Pressmittel (27, 28) mindestens eine Rastplatte (27) umfassen, die sich vertikal bewegt, um auf der Platte (L) aufzuliegen, die auf der Arbeitsfläche (4) liegt.

5. Maschine (1) nach einem oder mehreren der vorhergehenden Ansprüche, **dadurch gekennzeichnet, dass** der Greif-/ Retentionskopf (13, 14) Greifmittel (30, 31) aufweist, die geeignet sind, die Platte (L) aufzunehmen und in Bezug zur Arbeitsfläche (4) zu bewegen.

6. Maschine (1) nach Anspruch 5, **dadurch gekennzeichnet, dass** die Greifmittel (30, 31) mindestens eine Saugplatte (30) umfassen, die sich vertikal bewegt, um an der Platte (L) anzuliegen, die auf der Arbeitsfläche (4) liegt.

7. Maschine (1) nach Anspruch 5 oder 6, **dadurch gekennzeichnet, dass** sie mindestens eine Ladefläche (32) für die zu schneidende Platte (L) umfasst und eine Entladefläche (33) für die geschnittene Platte (L), wobei mindestens eine der Ladefläche (32) und der Entladefläche (33) von dem Greif-/ Retentionskopf (13, 14) mit Greifmitteln (30, 31) erreicht wird, um die Platte (L) in Bezug auf die Arbeitsfläche (4) aufzuladen und/oder abzuladen.

8. Maschine (1) nach einem oder mehreren der vorhergehenden Ansprüche, **dadurch gekennzeichnet, dass** der erste Kopf (13) Pressmittel (27, 28) umfasst und dass der zweite Kopf (14) Greifmittel (30, 31) umfasst.

9. Maschine (1) nach einem oder mehreren der vorhergehenden Ansprüche, **dadurch gekennzeichnet, dass** sie mindestens einen Sicherungsstand umfasst, der geeignet ist, den Arbeitsbereich innerhalb eines beschränkten Raums zu isolieren.

## Revendications

1. Machine (1) pour la coupe de panneaux, en particulier de marbre, granité, verre et matériaux composites, comprenant :
- au moins un châssis de base (2, 3) ;
- au moins un plan de travail (4) pour au moins un panneau (L) à couper, qui est associé audit châssis de base (2, 3) ;
- au moins une tête de coupe (5), possédant au moins un outil de coupe (6) destiné à couper ledit panneau (L) et associée audit châssis de base (2, 3) par interposition de premiers moyens de déplacement (7, 8, 9) de ladite tête de coupe (5) ;
- au moins une tête de préhension/maintien (13, 14) dudit panneau (L), destinée à saisir le panneau, ou à le maintenir ou à la fois à le saisir et le maintenir, associée audit châssis de base (2, 3) par interposition de seconds moyens de déplacement (15, 16) de ladite tête de préhension/maintien (13, 14), lesdits seconds moyens de déplacement (15, 16) étant distincts et indépendants desdits premiers moyens de déplacement (7, 8, 9) et comprenant :
- au moins une première unité de guidage (15), associée audit châssis de base (2, 3) et apte à déplacer ladite tête de préhension/maintien (13, 14) selon une première direction (A) sensiblement parallèle audit plan de travail (4) ; et
- au moins une seconde unité de guidage (16), associée à ladite première unité de guidage (15) coulissant selon ladite première direction (A) et apte au déplacement de ladite tête de préhension/maintien (13, 14) selon une seconde direction (B) sensiblement parallèle audit plan de travail (4) et transversale à ladite première direction (A) ;
**caractérisée en ce qu'**elle comprend au moins deux desdites têtes de préhension/maintien (13, 14), dont une première tête (13) et une seconde tête (14), et **en ce que** ladite première tête (13) et ladite seconde tête (14) sont toutes les deux associées à ladite seconde unité de guidage (16), ladite première tête (13) et ladite seconde tête (14) se déplaçant le long de ladite seconde unité de guidage (16) indépendamment l'une de l'autre.

2. Machine (1) selon la revendication 1, **caractérisée en ce que** ladite tête de préhension/maintien (13, 14) comprend au moins un coulisseau (20) associé à ladite seconde unité de guidage (16) coulissant selon ladite seconde direction (B).

3. Machine (1) selon l'une ou plusieurs des revendications précédentes, **caractérisée en ce que** ladite tête de préhension/maintien (13, 14) possède des moyens de pressage (27, 28) aptes à presser ledit panneau (L) sur ledit plan de travail (4).

4. Machine (1) selon la revendication 3, **caractérisée en ce que** lesdits moyens de pressage (27, 28) comprennent au moins une plaque d'appui (27) se déplaçant verticalement pour reposer sur ledit panneau (L) reposant sur ledit plan de travail (4).

5. Machine (1) selon l'une ou plusieurs des revendications précédentes, **caractérisée en ce que** ladite tête de préhension/maintien (13, 14) possède des moyens de préhension (30, 31) aptes à prendre ledit panneau (L) et le déplacer par rapport audit plan de travail (4).

6. Machine (1) selon la revendication 5, **caractérisée en ce que** lesdits moyens de préhension (30, 31) comprennent au moins une plaque ventouse (30) se déplaçant verticalement pour venir en butée contre ledit panneau (L) reposant sur ledit plan de travail (4).

7. Machine (1) selon la revendication 5 ou 6, **caractérisée en ce qu'**elle comprend au moins une zone de chargement (32) dudit panneau (L) à couper et une zone de déchargement (33) dudit panneau (L) coupé, au moins l'une de ladite zone de chargement (32) et ladite zone de déchargement (33) étant atteinte par ladite tête de préhension/maintien (13, 14) avec des moyens de préhension (30, 31) pour le chargement et/ou le déchargement dudit panneau (L) par rapport audit plan de travail (4).

8. Machine (1) selon l'une ou plusieurs des revendications précédentes, **caractérisée en ce que** ladite première tête (13) comprend des moyens de pressage (27, 28) et ladite seconde tête (14) comprend des moyens de préhension (30, 31).

9. Machine (1) selon l'une ou plusieurs des revendications précédentes, **caractérisée en ce qu'**elle comprend au moins une cabine de protection apte à isoler la zone de travail dans un espace confiné.
